(19) Europäisches Patentamt
European Patent Office
Office européen des brevets

(11) **EP 3 408 242 B1**

(12) **FASCICULE DE BREVET EUROPEEN**

(45) Date de publication et mention de la délivrance du brevet:
**23.07.2025 Bulletin 2025/30**

(21) Numéro de dépôt: **17706293.2**

(22) Date de dépôt: **27.01.2017**

(51) Classification Internationale des Brevets (IPC):
**C03C 17/245** (2006.01)

(52) Classification Coopérative des Brevets (CPC):
**C03C 17/245;** C03C 2217/23; C03C 2217/76;
C03C 2218/156

(86) Numéro de dépôt international:
**PCT/FR2017/050190**

(87) Numéro de publication internationale:
**WO 2017/129916 (03.08.2017 Gazette 2017/31)**

(54) **ARTICLE DE DOUCHE, DE BAIGNOIRE OU DE PARE-BAIGNOIRE**

DUSCH-, BADEWANNEN- ODER DUSCHWANDARTIKEL

SHOWER, BATH OR BATH SCREEN ARTICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2016 FR 1650718**

(43) Date de publication de la demande:
**05.12.2018 Bulletin 2018/49**

(73) Titulaire: **SAINT-GOBAIN GLASS FRANCE**
**92400 Courbevoie (FR)**

(72) Inventeurs:
• **CHERY, Vincent**
**75013 Paris (FR)**
• **NADAUD, Nicolas**
**75013 Paris (FR)**

(74) Mandataire: **Saint-Gobain Recherche**
**41 Quai Lucien Lefranc**
**93300 Aubervilliers (FR)**

(56) Documents cités:
WO-A2-2011/006883       US-A1- 2010 221 513
US-A1- 2011 008 641     US-A1- 2011 183 129

Remarques:
Le dossier contient des informations techniques présentées postérieurement au dépôt de la demande et ne figurant pas dans le présent fascicule.

EP 3 408 242 B1

**Description**

L'invention est relative à un article, notamment un vitrage, pour salle de bains ou tout autre environnement chaud et humide.

Plus particulièrement l'invention se rapporte à une paroi de douche, de baignoire ou de pare-baignoire, ou encore un miroir constitué par ou incorporant un vitrage destiné à être utilisé dans un environnement chaud et humide, plus particulièrement une salle-de-bain, le vitrage formant tout ou partie de ladite paroi de douche, de baignoire ou de pare-baignoire ou du miroir.

Il est connu qu'un environnement humide et chaud, notamment une salle de bains, induit une corrosion des vitrages en verre jusqu'à l'apparition de traces visibles blanchâtre. Cette rugosité de surface entraîne également une augmentation du flou à la surface du vitrage, qui prend alors un aspect laiteux dans ses parties les plus corrodées.

En parallèle, ces vitrages se salissent rapidement du fait de dépôts de saletés, notamment du calcaire ou du savon, cette salissure nécessitant l'utilisation régulière de produits d'entretien agressifs pour la surface du verre.

De manière connue, un revêtement suffisamment hydrophobe permet à l'eau déposée sur celui-ci de perler sous forme de gouttes. Lorsque les gouttes sont assez grosses, elles s'écoulent naturellement par gravité sur la surface verticale de la paroi de douche ou de baignoire. Elles laissent donc moins de traces de calcaire en séchant. Dans le cas des parois objet de l'invention, il est donc utile que le revêtement de protection contre la corrosion présente également des propriétés d'hydrophobie pour limiter le dépôt de calcaire.

Dans le domaine des vitrages ou revêtements dits hydrophobes, on mentionne généralement, pour évaluer les interactions entre le vitrage et l'eau :

- l'angle de contact $\theta$, qui permet d'évaluer le caractère plus ou moins hydrophobe d'une surface placée en position horizontale et
- le volume de glissement qui évalue plus directement la propension d'une goutte à glisser le long de la paroi du vitrage en position inclinée ou verticale, en tenant compte notamment de l'état de surface de celui-ci

(en particulier de la rugosité et de l'homogénéité chimique de ladite surface).

L'angle de contact est au sens de la présente invention l'angle formé par la surface du substrat et la tangente à la goutte au point de rencontre entre l'air, le substrat et une goutte d'eau déposée par une seringue sur ledit substrat, placé en position horizontale.

La combinaison d'un angle de contact élevé et d'un faible volume de glissement permet de minimiser le volume d'eau séchant sur la paroi et par suite le dépôt calcaire sur celle-ci.

Afin de ne pas gêner la visualisation et dans un souci d'esthétique et de facilité de nettoyage, ces substrats verriers peuvent, de manière connue, revêtus pour la plupart de couches hydrophobes du type silicones ou molécules fluorées. On peut notamment citer le verre commercialisé sous le nom Aquacontrol® de la société SAINT-GOBAIN. Les revêtements organiques en silicone ou comprenant des molécules fluorées présentent en effet les meilleures performances d'hydrophobie au sens précédemment décrit. Cependant, la dureté de telles couches hydrophobes est par nature très faible (ces composés étant de nature organique), tandis que l'accroche entre ces couches et le substrat verrier est souvent assez mauvaise (particulièrement pour les silicones). Il en résulte qu'elles commencent à se dégrader rapidement (quelques semaines à quelques mois), laissant des parties de la surface hydrophiles tandis que d'autres restent hydrophobes. Cette inhomogénéité chimique tend à défavoriser l'écoulement global des gouttes d'eau le long de la paroi vitrée.

En outre, en présence d'eau, la surface du verre qui n'est plus protégée s'altère et se corrode progressivement du fait de la perte des cations, notamment du type alcalins, présents initialement dans le matériau verrier. Sous l'effet de cette corrosion, la surface verrière voit sa rugosité augmenter, ce qui peut nuire également à l'évacuation des gouttes d'eau.

On obtient au final après quelques mois d'utilisation un vitrage présentant une alternance de zones hydrophobes (où la couche est encore présente) et de zone non hydrophobes rugueuses (où la couche n'est plus présente), préjudiciable à l'écoulement de l'eau et donc favorisant le dépôt de calcaire.

Par ailleurs, si en extérieur l'évacuation des gouttes d'eau sur un vitrage hydrophobe est favorisée par la présence d'un flux d'air tel que le vent (notamment sur des vitrages automobiles), en intérieur ce n'est pas le cas. Par conséquent, les petites gouttes d'eau dont le poids n'est pas suffisamment important ne vont pas s'écouler, formant ce qu'on désigne habituellement par la « buée », qui vont là encore laisser des traces de calcaire en séchant.

Aussi, bien qu'un revêtement hydrophobe utilisé en salle-de-bain soit appréciable pour enlever facilement les salissures, il est grandement recommandé d'essuyer la vitre à l'aide d'une raclette pour la rendre propre et sèche après projection d'eau et formation de gouttes se détachant difficilement seules.

Si le calcaire résiduel peut ensuite être nettoyé par des produits vendus dans le commerce comme anticalcaire, ces derniers agressent néanmoins le revêtement hydrophobe qui s'altère ainsi encore plus rapidement au cours du temps.

Ainsi, lorsque l'utilisation de produits nettoyants conduit à l'agression du revêtement hydrophobe, voire l'élimine sur certaines parties du vitrage, la partie du verre mise à nu se corrode ensuite dans le temps, entraînant une augmentation de la rugosité de sa surface. La surface verrière est par la suite de plus en plus difficile à nettoyer du fait de l'incrustation du calcaire sur la surface rendue rugueuse. Cette rugosité de surface entraîne également une augmentation du flou à la surface du vitrage, qui prend alors un aspect laiteux dans ses parties les plus corrodées.

Enfin, les revêtements hydrophobes classiquement utilisés ne sont pas trempables (c'est-à-dire qu'ils ne peuvent résister aux températures nécessaires pour tremper le substrat verrier qui les supportent), ce qui oblige à les déposer après l'étape de trempe du vitrage, qui vise à rendre ce dernier résistant aux chocs, et donc après la découpe des panneaux verriers aux dimensions finales. Ceci occasionne évidemment un coût supplémentaire, et implique le plus souvent que le dépôt soit effectué chez les transformateurs du verre alors qu'ils ne sont pas nécessairement équipés pour cela.

En résumé, les revêtements hydrophobes classiques décrits précédemment offrent une efficacité limitée sur le dépôt de saletés à la surface du verre, ont une durée de vie relativement limitée, oscillant entre quelques mois et quelques années, et impliquent au final une protection contre la corrosion limitée dans le temps, ainsi qu'une résistance limitée aux produits détartrants actuellement commercialisés.

Il est en outre nécessaire de les déposer séparément sur un substrat verrier déjà préalablement trempé.

Au final, un tel revêtement hydrophobe est peu pratique pour des substrats verriers trempés, tels que ceux utilisés en salle de bains, pour lesquels les gouttes d'eau ne sont pas toujours essuyées après chaque projection, et qui sont destinés à être fréquemment nettoyés avec des produits agressifs.

D'autres solutions de vitrages pour salle de bains sont proposées à l'heure actuelle. En particulier, des couches carbonées type DLC (Diamond Like Carbon) ont été avancées dans les demandes WO2013184607A2 ou encore WO2013003186A1. Il est indiqué que cette couche permet de faciliter le nettoyage du verre et de le rendre résistant au calcaire. La couche hydrophobe DLC présente un angle de contact θ initial de 70° et est indiquée comme étant trempable au sens précédemment indiqué, c'est-à-dire qu'il n'est plus nécessaire de déposer cette couche après l'étape de trempe de son support verrier.

Un inconvénient de cette couche DLC est lié à la trempe, qui est rendue possible uniquement grâce à l'ajout de trois couches par-dessus la couche DLC pour sa protection : une couche dense sensible à l'attaque acide, une couche dense barrière à l'oxygène et une couche polymère résistante à la rayure. La couche plastique est enlevée manuellement juste avant l'étape de trempe, et nécessite des outils de découpe spécifiques. Les deux couches denses sont supprimées après trempe grâce à un nettoyage au vinaigre, qui nécessite lui aussi des outils spécifiques. L'obtention du produit final monocouche via un produit quadri-couche initial s'avère donc au final être un procédé complexe et coûteux. Un autre inconvénient de la couche est sa probable coloration grise, due à l'absorption par la couche DLC d'une partie du rayonnement visible.

US 2010/221513 A1 divulgue une feuille de verre comprenant une couche de nanoparticules d'oxyde de titane et de zirconium, qui est utilisée dans des applications de salle de bains autonettoyantes.

L'invention a donc pour but de fournir un article comprenant ou constitué par un vitrage qui, au cours de sa transformation, de sa vie et de son utilisation, ne présente pas les inconvénients précités, en particulier l'apparition de corrosion, la coloration du vitrage, l'accumulation de calcaire à sa surface et l'utilisation d'outils spécifiques pour la transformation, qui est facilement nettoyable. L'invention se propose également de fournir un vitrage durable dans des conditions chaudes et humides et dont la fabrication est simple et peu coûteuse, incorporant un revêtement pouvant subir l'étape de trempe de son support verrier sans dommage ni dégradation sensible de ses propriétés.

Plus précisément, l'invention se rapporte à un article pour environnement humide, en particulier une paroi de cabine de douche, de baignoire ou de pare-baignoire ou encore un miroir, comprenant ou constitué par un vitrage, ledit vitrage comprenant un substrat verrier revêtu sur au moins une de ses faces d'une couche unique à base d'un oxyde de titane et de zirconium. L'épaisseur physique de ladite couche unique est selon l'invention comprise entre 3 et 14 nanomètres, le substrat verrier étant un verre float selon l'invention.

Selon certains aspects particuliers et avantageux de la présente invention, qui peuvent bien entendu être combinés entre eux, le cas échéant :

- Le rapport molaire Ti/Zr dans la couche est compris entre 60/40 et 90/10, de préférence entre 65/35 et 85/15 de préférence entre 72/28 et 82/18.

- La couche unique est présente sur une face non rugueuse du substrat verrier. Par surface non rugueuse, on entend typiquement au sens de la présente invention, que la rugosité RMS (root mean square) de la surface du verre est inférieure à 1 micromètre, de préférence encore inférieure à 100 nanomètres, par exemple telle que mesurée selon la norme ISO4287 et en utilisant la microscopie à force atomique (AFM), et ce quelle que soit la surface de mesure. La surface de mesure peut par exemple varier entre 16 à 100 $\mu m^2$, par exemple 50 $\mu m^2$.

- Selon l'invention, la couche est cependant normalement déposée directement sur la surface du substrat verrier, sans traitement de texturation préalable de celui-ci visant à en augmenter sa rugosité, du type gravure acide ou basique ou encore sablage. Dans un tel cas il est connu que la rugosité RMS de ladite surface est le plus souvent inférieure à 10 nm, voire inférieure à 1 nm.

- Ledit vitrage est trempé et/ou bombé.
- Ledit vitrage présente une réflexion lumineuse $R_L$ inférieure à 15%.
- Ledit vitrage présente un flou inférieur à 2%, de préférence inférieur à 1%.
- Ledit substrat verrier est un verre clair d'épaisseur comprise entre 3 et 20 mm, de préférence entre 5 et 15 mm. Cela peut-être en particulier un verre extra-clair, c'est-à-dire dont la transmission lumineuse est supérieure à 91%, voire supérieure à 92% comme le verre diamant® de la société déposante.
- Ledit substrat verrier est un verre coloré d'épaisseur comprise entre 3 et 20 mm, de préférence entre 5 et 15 mm. Cela peut-être en particulier un verre gris.
- L'épaisseur physique de ladite couche unique est compris entre 3 et 13 nm, de préférence encore entre 5 et 10 nm. L'épaisseur de la couche est par exemple mesurée par microsonde de Castaing (EPMA).
- La couche est déposée par une technique de dépôt physique par phase vapeur (PVD) en particulier du type dépôt sous vide, et tout particulièrement par pulvérisation cathodique de préférence assistée par champ magnétique.

Enfin, la présente invention concerne un procédé de fabrication d'un article tel que précédemment décrit comprenant un vitrage trempé et/ou bombé, ledit vitrage étant constitué d'un substrat verrier revêtu sur au moins une partie de sa surface d'une couche d'oxyde de titane et de zirconium telle que décrite précédemment, ladite couche étant unique, ledit procédé comprenant les étapes qui consistent à déposer la couche sur ledit substrat par une technique de dépôt sous vide telle que la pulvérisation cathodique assistée par champ magnétique d'une cible du matériau à déposer, et à effectuer le traitement thermique de trempe et/ou de bombage sur le substrat ainsi revêtu de la couche à base d'oxyde de titane et de zirconium.

Par le terme « à base d'oxyde de titane et de zirconium », on entend au sens de la présente invention que l'oxyde comprend très majoritairement des cations des atomes de titane et zirconium, voire que l'oxyde est constitué essentiellement dudit oxyde de titane et de zirconium, sans toutefois exclure que d'autres cations, en particulier d'autres atomes métalliques tels que Al, Ga, In, B, Y, La, Ge, Si, P, As, Sb, Bi, Ce, Nb and Ta, puissent être présents dans une quantité très minoritaire par rapport à la somme des atomes de titane et de zirconium, par exemple en une quantité d'atomes inférieure à 10% de ladite somme, ou même inférieure à 5% de ladite somme, ou même en une quantité inférieure à 2% de ladite somme. L'insertion de tels cations peut notamment avoir pour but de favoriser le dépôt des couches d'oxyde sur le substrat par les techniques du magnétron, comme indiqué dans la demande WO 00/24686. La composition de la couche est par exemple mesurée par microsonde de Castaing (EPMA).

Par vitrage, on entend au sens de la présente description un article comprenant un substrat verrier.

Par miroir, on entend un article comprenant une surface en verre dont la réflexion lumineuse est supérieure à 95%, notamment supérieure à 97% ou encore supérieure à 98%, mesurée selon la norme ISO 9050 (2003).

De préférence encore, la couche uniquement est constituée essentiellement de titane, de zirconium et d'oxygène.

De préférence encore, aux impuretés inévitables près, la couche ne comprend, outre l'oxygène, que du zirconium et du titane. En particulier, de façon bien connue, les couches selon l'invention peuvent comprendre comme impureté inévitable une portion mineure de Hf, celui-ci étant toujours présent en tant qu'impureté dans l'oxyde de zirconium commercial.

Les épaisseurs au sens de la présente invention sont des épaisseurs physiques, sauf autrement spécifié.

Le revêtement selon l'invention a plusieurs rôles, elle est facile à nettoyer (fonction « easy-to-clean » selon les termes employés dans le domaine) et anticorrosion (fonction de prévention de la corrosion du substrat), et résistante aux produits d'entretien actuellement commercialisés. La couche est également considérée comme hydrophobe au sens de la présente invention, dans le sens où l'angle d'avancé d'une goutte d'eau à sa surface est très supérieur à celui mesuré sur une surface de verre nue (l'angle étant environ de 38° pour le verre nu).

En particulier, l'invention se rapporte non seulement à un article tel qu'une paroi telle que déjà décrite ou un miroir comprenant un vitrage obtenu directement par dépôt de la couche anticalcaire à base d'un oxyde de titane et de zirconium tel que précédemment décrit mais également à une paroi comprenant ce même vitrage après qu'il ait subi un traitement de trempe visant à le rendre mécaniquement résistant ou un bombage.

Les inventeurs ont mis en évidence de manière inattendue le caractère hydrophobe de la couche d'oxyde de titane et de zirconium au cours de son utilisation. Une telle propriété permet de façon inattendue d'envisager l'utilisation d'une telle couche, de façon très avantageuse, comme couche externe et unique d'une paroi de salle de bain incorporant un verre trempé pour être résistant mécaniquement, soumis à des projections d'eau, doit évacuer rapidement celles-ci. De façon très avantageuse, l'utilisation d'une telle couche à base d'un oxyde de titane et de zirconium permet en outre d'envisager le traitement du substrat verrier sur lequel ladite couche a préalablement été déposée, notamment par les techniques de pulvérisation cathodique (magnétron).

L'invention et ses avantages sont décrits à l'aide des exemples suivants, uniquement illustratifs et nullement limitatifs de la portée de l'invention.

Les vitrages décrits dans tous ces exemples intègrent un substrat verrier comportant sur au moins sur une partie de sa surface un revêtement constitué par une couche externe, cette partie étant plus particulièrement destinée à être exposée lors de son utilisation à un environnement intérieur humide et chaud, tel qu'une salle-de-bain, et plus particulièrement destinée à recevoir des projections d'eau.

Aucune autre couche n'est bien entendu déposée au-dessus dudit revêtement, nonobstant la présence possible, par endroits, d'autres éléments décoratifs ou à visée d'identification commerciale.

Le substrat utilisé dans les exemples qui suivent est en verre float sodo-calcique, d'une épaisseur de 8 mm et commercialisé sous la référence Planiclear® par la société déposante.

De manière conventionnelle, la couche unique d'oxyde de zirconium et de titane est déposée sur le substrat verrier selon les techniques classiques et bien connues de dépôt de couches minces au sein d'une enceinte de pulvérisation cathodique assistée par champ magnétique (magnétron), par exemple dans les conditions décrites par la suite.

Les vitrages comprenant le substrat verrier ainsi revêtu sont ensuite trempés avant la mesure de leurs propriétés spécifiques d'hydrophobie et de résistance mécanique et chimique, selon les protocoles décrits par la suite.

Selon une première série d'exemples, on vérifie la trempabilité du revêtement selon l'invention et notamment ses propriétés après le traitement thermique du substrat verrier revêtu, notamment par rapport aux autres revêtements utilisés aujourd'hui et décrits précédemment dans les vitrages de salle de bains.

Plus précisément, la couche d'oxyde de titane et de zirconium est déposée par les techniques de pulvérisation magnétron sur le substrat de verre Planiclear® de 8mm d'épaisseur. La couche est obtenue à partir d'une cible synthétisée par la technologie plasma spraying et à partir d'un mélange de deux poudres de $TiO_2$ et de $ZrO_2$, selon un rapport atomique Ti/Zr entre les deux oxydes d'environ 75/25.

La cible ainsi constituée est disposée dans une enceinte sous vide et pulvérisée sur le substrat verrier par un plasma obtenu à parti d'argon injecté dans l'enceinte selon les techniques classiques de l'art. Au final, on dépose une couche d'un oxyde de titane et de zirconium sur le substrat verrier d'épaisseur égale à environ 7 nm, telle que mesurée par microscopie électronique.

Les analyses effectuées sur la couche ainsi déposée montrent que le rapport atomique Ti/Zr au sein de ladite couche est de l'ordre de 77/23. Les analyses sont effectuées selon les techniques classiques de microsonde dites EPMA (Electron Probe Micro-Analysis).

Le vitrage muni de la couche selon l'invention subit ensuite un chauffage à 680°C pendant 5 minutes, suivi d'une trempe. Les tests sont pratiqués sur le vitrage trempé.

Le vitrage ainsi obtenu est comparé à un vitrage de référence, présentant un revêtement hydrophobe usuel à base de silanes fluorés, en l'espèce un verre commercialisé sous la marque Aquacontrol® par la société déposante, obtenu grâce à une fonctionnalisation par chiffonnage d'un substrat verrier préalablement trempé (sachant que la couche hydrophobe ne peut supporter la trempe).

Enfin, les performances des deux vitrages précédents sont comparées à celles du substrat verrier nu trempé de la même manière que précédemment. Les tests pratiqués sur les différents vitrages pour en comparer les performances, reportées dans le tableau 1, sont décrits ci-après : L'angle de contact à l'eau θ est mesuré avec une goutte de 5 μL déposée à l'aide d'une seringue sur la surface horizontale du substrat et à l'aide d'une caméra adaptée.

Le volume de glissement est défini comme la valeur limite au-dessous de laquelle les gouttes ne s'écoulent plus à la surface d'un substrat tenu verticalement, leur poids n'étant plus suffisant pour les entraîner vers le bas.

Si l'angle de contact θ renseigne sur le caractère hydrophobe de la couche, le volume limite de glissement est également représentatif des performances souhaitées du vitrage lors de son utilisation, notamment comme paroi de douche comme expliqué précédemment.

Ces deux valeurs sont obtenues après exposition des échantillons à l'air libre pendant 2 jours, afin de simuler les conditions d'utilisation réelles où les vitrages ne sont pas nettoyés avant utilisation.

Le test de Haute Humidité (HH) est mené dans les conditions qui suivent : l'échantillon, dont le verre est protégé sur la face arrière (non revêtue) est placé verticalement dans une enceinte chauffée à 50°C et dans laquelle règne une humidité relative constante de 95% pendant 21 jours, l'eau déminéralisée étant utilisée comme source d'humidité. On mesure ensuite le flou apparu, le flou étant défini comme le rapport entre la transmission diffuse et la transmission totale. Ce flou est le résultat de l'apparition de rugosité à la surface du substrat sous l'action de la corrosion du substrat verrier. Ce test de vieillissement accéléré apparaît très représentatif des conditions réelles d'utilisation, sur une longue durée, du vitrage dans une atmosphère chaude et humide telle qu'une salle de bain.

Par flou, mesuré en pourcentage, il est entendu au sens de la présente invention la perte par diffusion de la lumière, c'est-à-dire de façon classique le rapport entre la partie diffusée de la lumière (fraction diffuse ou $T_d$) sur la lumière directement transmise au travers du vitrage ($T_L$), généralement exprimée en pourcentages. La transmission diffuse mesure ainsi la fraction lumière diffusée par la couche déposée à la surface du substrat de verre. Le flou est classiquement être mesuré par des techniques de spectroscopie, l'intégration sur tout le domaine du visible (380-780 nm) permettant la détermination de la transmission normale $T_L$ et de la transmission diffuse $T_d$. Une telle mesure est obtenue par l'utilisation d'un Hazemeter. On considère qu'un vitrage reste conforme si son flou reste inférieur à 3% et de préférence est inférieur à 2% ou même inférieur à 1% lors d'une mesure avec un Hazemeter. L'appareil utilisé est un dispositif « Haze-Gard ®» commercialisé par la société BYK-Gardner.

Les résultats obtenus pour les différents tests et les différents vitrages étudiés sont regroupés dans le tableau 1 qui suit :

Tableau 1

| Revêtement | Aucun (Verre nu) | Aquacontrol® | Invention |
|---|---|---|---|
| $\theta_{contact}$ | 30° | 105° | 84° |
| $V_{glissement}$ | Traînée | 15 μL | 17 μL |
| Flou après test HH (21 jours) | 3,4% | non mesuré | 0,6% |

Les mesures effectuées par la société déposante montrent que le vitrage selon l'invention diffère du verre nu par une grande résistance à la l'humidité (test HH), et par une bonne faculté à faire s'écouler les gouttes d'eau, comme l'indique son faible volume de glissement, proche de celui de la couche hydrophobe organique de référence. Une telle propriété permet de limiter efficacement la quantité de gouttes d'eau restant après chaque aspersion à la surface de la paroi, et donc l'apparition de traces de calcaire et/ou la quantité d'eau à essuyer. La couche selon l'invention présente des propriétés assez proches de celles de la couche comparative hydrophobe, mais contrairement à celle-ci, elle peut être déposée sur un substrat verrier à tremper (ou trempable) selon un avantage supplémentaire.

La présente invention permet ainsi au final l'obtention de vitrages dont les propriétés en utilisation se rapprochent de celles des vitrages comprenant des couches hydrophobes organiques, avec pour avantage supplémentaire que le substrat verrier peut être trempé après dépôt de ladite couche d'oxyde titane et de zirconium, notamment par les techniques conventionnelles de dépôt sous vide tel que la pulvérisation cathodique.

Selon une deuxième série d'expérience, on soumet une paroi selon l'invention constituée par le vitrage décrit précédemment à une série de tests pour en mesurer les propriétés de résistance mécanique (résistance à l'abrasion) et de résistance aux produits d'entretien (résistance à la corrosion et résistance aux produits anticalcaires).

Sur la paroi selon l'invention, on mesure ainsi, sur le vitrage trempé :

- la résistance à l'abrasion du revêtement, mesurée selon la norme EN1096 (2012) partie 2, annexe E, 500 cycles. L'état général de surface (nombre et profondeur des rayures) est inspecté visuellement et comparativement d'un échantillon à l'autre après le test,
- la résistance aux acides, par immersion des vitrages pendant 48h dans du vinaigre et dans deux produits d'entretien classiquement utilisés en France pour le nettoyage des vitrages intérieurs de salle de bains sous les références commerciales Antikal® et Cilit-bang®.

L'aptitude du vitrage revêtu à supporter les traitements acides est mesurée par l'intermédiaire des caractéristiques physiques suivantes :

- La différence d'épaisseur $\Delta e$ de la couche entre sa valeur initiale (avant test) et sa valeur finale (après test).
- La différence de la réflexion lumineuse du vitrage coté couche $\Delta R_L$ entre sa valeur initiale et sa valeur finale. D'une manière générale, toutes les caractéristiques lumineuses et énergétiques présentées dans la présente description sont obtenues selon les principes et méthodes décrits dans la norme internationale ISO 9050 (2003), se rapportant à la détermination des caractéristiques lumineuses, solaires et énergétiques des vitrages.
- La variation colorimétrique du vitrage est également mesurée classiquement dans le système colorimétrique L*, a*, b* et sous incidence normale, en utilisant la grandeur $\Delta E$ classiquement utilisée dans le système international L*, a*, b* et définie par la relation:

$$\Delta E = \sqrt{(\Delta a^*)^2 + (\Delta b^*)^2 + (\Delta L^*)^2}$$

Tableau 2

| | Tests de résistance aux acides | | | Test d'abrasion |
|---|---|---|---|---|
| | Vinaigre | Antikal™ | Cilit-bang™ | |
| $\Delta e$ | 0 | 0 | 0 | Pas de rayures |
| $\Delta R_L$ | 0,1 | 0,1 | 0,2 | |
| $\Delta E$ | 0,3 | 0,4 | 0,6 | |
| Aspect visuel | Pas de traces visibles | Pas de traces visibles | Pas de traces visibles | |

Les résultats des tests, reportés dans le tableau 2 qui précède, montrent que la paroi selon l'invention présente des propriétés de résistance à l'abrasion et de résistance aux acides utilisés actuellement dans les produits ménagers. De telles caractéristiques permettent de garantir sa longévité dans un environnement humide et sous l'effet de traitements répétés aux produits d'entretien classiques. L'absence de variation d'épaisseur de la couche, des valeurs colorimétriques et de réflectivité lumineuse (RL) indique que la couche n'est pas dégradée par les tests.

Il est donc possible selon l'invention de garantir des parois vitrées dont les couches résistent aux produits d'entretien sur une longue période, compatible avec la durée normale d'utilisation du produit.

**Revendications**

1. Article pour environnement humide telle qu'une salle de bain, comprenant ou constitué par un vitrage, ledit vitrage comprenant un substrat verrier revêtu sur au moins une de ses faces d'une couche unique à base d'un oxyde de titane et de zirconium, l'épaisseur physique de ladite couche unique étant comprise entre 3 et 14 nanomètres, la couche étant déposée directement sur le substrat verrier sans traitement de texturation préalable de celui-ci visant à en augmenter sa rugosité, le substrat verrier étant un verre float.

2. Article selon la revendication 1, dans laquelle le rapport molaire Ti/Zr dans la couche est compris entre 60/40 et 90/10.

3. Article selon l'une des revendications précédentes dans lequel ledit vitrage est trempé et/ou bombé.

4. Article selon l'une des revendications précédentes dans lequel ledit substrat verrier est un verre clair ou extra-clair d'épaisseur comprise entre 3 et 20mm.

5. Article selon l'une des revendications 1 à 5 dans lequel ledit substrat verrier est un verre coloré d'épaisseur comprise entre 3 et 20nm.

6. Article selon l'une des revendications précédentes dans lequel l'épaisseur physique de ladite couche unique est comprise entre 5 et 13 nm.

7. Article selon l'une des revendications précédentes dans laquelle le rapport molaire Ti/Zr dans la couche est compris entre 72/28 et 82/18.

8. Article selon l'une des revendications précédentes dans laquelle ledit vitrage comprend un substrat verrier revêtu sur ses deux faces d'une couche unique à base d'un oxyde de titane et de zirconium, l'épaisseur physique de chaque couche unique étant comprise entre 3 et 14 nanomètres.

9. Article selon l'une des revendications précédentes, dans lequel ledit article est une paroi de cabine de douche, de baignoire ou de pare-baignoire.

10. Article selon l'une des revendications précédentes, dans lequel ledit article est un miroir.

11. Procédé de fabrication d'un article tel que décrit dans les revendications précédentes comprenant un vitrage trempé et/ou bombé, ledit vitrage étant constitué d'un substrat verrier revêtu sur au moins une partie de sa surface d'une couche unique d'oxyde de titane et de zirconium, ledit procédé comprenant les étapes qui consistent à déposer la couche sur ledit substrat par une technique de dépôt sous vide telle que la pulvérisation cathodique assistée par champ magnétique et à effectuer le traitement thermique de trempe et/ou de bombage sur le substrat ainsi revêtu de la couche d'oxyde de titane et de zirconium.

**Patentansprüche**

1. Artikel für eine feuchte Umgebung wie ein Badezimmer, umfassend oder bestehend aus einer Verglasung, die Verglasung umfassend ein Glassubstrat, das auf mindestens einer seiner Flächen mit einer einzelnen Schicht auf Basis von Titan- und Zirkoniumoxid beschichtet ist, wobei die physikalische Dicke der einzelnen Schicht zwischen 3 und 14 Nanometer beträgt, wobei die Schicht direkt auf das Glassubstrat abgeschieden ist, ohne vorherige Texturierungsbehandlung, die auf ein Erhöhen seiner Rauheit abzielt, wobei das Glassubstrat ein Floatglas ist.

2. Artikel nach Anspruch 1, wobei das Molverhältnis Ti/Zr in der Schicht zwischen 60/40 und 90/10 beträgt.

3. Artikel nach einem der vorstehenden Ansprüche, wobei die Verglasung gehärtet und/oder gebogen ist.

4. Artikel nach einem der vorstehenden Ansprüche, wobei das Glassubstrat ein klares oder extra klares Glas mit einer Dicke zwischen 3 und 20 mm ist.

5. Artikel nach einem der Ansprüche 1 bis 5, wobei das Glassubstrat ein farbiges Glas mit einer Dicke zwischen 3 und 20 nm ist.

6. Artikel nach einem der vorstehenden Ansprüche, wobei die physikalische Dicke der einzelnen Schicht zwischen 5 und 13 nm liegt.

7. Artikel nach einem der vorstehenden Ansprüche, wobei das Molverhältnis Ti/Zr in der Schicht zwischen 72/28 und 82/18 ist.

8. Artikel nach einem der vorstehenden Ansprüche, wobei die Verglasung ein Glassubstrat umfasst, das auf seinen zwei Flächen mit einer einzelnen Schicht auf Basis von Titan- und Zirkoniumoxid beschichtet ist, wobei die physikalische Dicke jeder einzelnen Schicht zwischen 3 und 14 Nanometer beträgt.

9. Artikel nach einem der vorstehenden Ansprüche, wobei der Artikel eine Wand einer Duschkabine, einer Badewanne oder einer Badewannenabtrennung ist.

10. Artikel nach einem der vorstehenden Ansprüche, wobei der Artikel ein Spiegel ist.

11. Verfahren zum Herstellen eines Artikels wie in den vorstehenden Ansprüchen beschrieben, umfassend eine gehärtete und/oder gebogene Verglasung, wobei die Verglasung aus einem Glassubstrat besteht, das auf mindestens einem Teil seiner Oberfläche mit einer einzelnen Schicht aus Titan- und Zirkoniumoxid beschichtet ist, das Verfahren umfassend die Schritte, die aus dem Abscheiden der Schicht auf das Substrat durch eine Vakuumabscheidungstechnik, wie magnetfeldunterstützte Kathodenzerstäubung, und einem Durchführen der Härte- und/oder Biegewärmebehandlung auf dem so mit der Schicht aus Titan- und Zirkoniumoxid beschichteten Substrat bestehen.

**Claims**

1. An article for a humid environment, such as a bathroom, comprising or consisting of a glazing, said glazing comprising a glass substrate coated on at least one of its faces with a single layer based on a zirconium titanium oxide, the physical thickness of said single layer being between 3 and 14 nanometers, the layer being deposited directly on the glass substrate without prior texturing treatment of the latter targeted at increasing its roughness thereof, the glass substrate being a float glass.

2. The article as claimed in claim 1, in which the Ti/Zr molar ratio in the layer is between 60/40 and 90/10.

3. The article as claimed in one of the preceding claims, in which said glazing is tempered and/or bent.

4. The article as claimed in one of the preceding claims, in which said glass substrate is a clear or extra clear glass with a thickness of between 3 and 20 mm.

5. The article as claimed in one of claims 1 to 3, in which said glass substrate is a colored glass with a thickness of between 3 and 20 nm.

6. The article as claimed in one of the preceding claims, in which the physical thickness of said single layer is between 5 and 13 nm.

7. The article as claimed in one of the preceding claims, in which the Ti/Zr molar ratio in the layer is between 72/28 and 82/18.

8. The article as claimed in one of the preceding claims, in which said glazing comprises a glass substrate coated on both its faces with a single layer based on a zirconium titanium oxide, the physical thickness of each single layer being between 3 and 14 nanometers.

9. The article as claimed in one of the preceding claims, in which said article is a shower stall, bath or bath screen wall.

10. The article as claimed in one of the preceding claims, in which said article is a mirror.

11. A process for the manufacture of an article as described in the previous claims, comprising a tempered and/or bent glazing, said glazing being composed of a glass substrate coated on at least a portion of its surface with a single layer of zirconium titanium oxide, said process comprising the stages which consist in depositing the layer on said substrate by a vacuum deposition technique, such as magnetic-field-assisted cathode sputtering, and in carrying out the tempering and/or bending heat treatment on the substrate thus coated with the layer of zirconium titanium oxide.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013184607 A2
- WO 2013003186 A1
- US 2010221513 A1
- WO 0024686 A